(19) Europäisches Patentamt
European Patent Office
Office européen des brevets

(11) Publication number: 0 234 759 B1

(12) **EUROPEAN PATENT SPECIFICATION**

(45) Date of publication of the patent specification: **01.08.90**

(51) Int. Cl.[5]: **B01J 29/04**

(21) Application number: **87300828.8**

(22) Date of filing: **30.01.87**

(54) **Controlling the catalytic activity of zeolites.**

(30) Priority: **14.02.86 US 829677**

(43) Date of publication of application: **02.09.87 Bulletin 87/36**

(45) Publication of the grant of the patent: **01.08.90 Bulletin 90/31**

(84) Designated Contracting States: **BE DE FR GB IT NL SE**

(56) References cited:
**EP-A- 0 068 796**
**EP-A- 0 169 026**
**US-A- 4 268 420**

(73) Proprietor: **MOBIL OIL CORPORATION, 150 East 42nd Street, New York New York 10017(US)**

(72) Inventor: **Chu, Pochen, 1173 Ollerton Road, West Deptford New Jersey 08066(US)**

(74) Representative: **Cooper, John Anthony et al, Mobil Court 3 Clements Inn, London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

EP 0 234 759 B1

## Description

This invention relates to a method for controlling the catalytic activity of zeolites.

Zeolite catalysts have become widely used in the processing of petroleum and in the production of various petrochemicals. Reactions such as cracking, hydrocracking, catalytic dewaxing, alkylation, dealkylation transalkylation, isomerization, polymerization, addition, disproportionation and other acid catalyzed reactions may be performed with the aid of these catalysts. Both natural and synthetic zeolites are known to be active for these reactions.

The common crystalline zeolite catalysts employ aluminosilicates such as zeolites A, X, Y and mordenite. Structurally, each such material can be described as a robust three dimensional framework of $SiO4$ and $A1O4$ tetrahedra that are crosslinked by the sharing of oxygen atoms whereby the ratio of total aluminum and silicon atoms to oxygen is 1:2. These structures (as well as other crystalline zeolites of catalytic usefulness) are porous, and permit access of reactant molecules to the interior of the crystal through windows formed of eight-membered rings (small pore), ten--membered rings (intermediate pore) or of twelve rings (large pore). The electrovalence of the aluminum that is tetrahedrally contained in the robust framework is balanced by the inclusion of cations in the channels (pores) of the crystal.

An "oxide" empirical formula that has been used to described the above class of crystalline zeolites is

$$M_{2/n}0.Al_2O_3.xSiO_2.yH_2O$$

wherein M is a cation with valence n. For many naturally-occurring zeolites, x has a value of from 2 to 10, but recently zeolites have been synthesized with x, commonly referred to as "the silica to alumina ratio", exceeding 10. Such high silica to alumina ratio zeolites have been found to exhibit many advantageous properties, including a high degree of structural stability, and have proposed for use in various processes, especially catalytic processes.

In some instances, incorporating an oxide of boron in the forming solution of a high silica content zeolite results in a zeolite that contains framework boron.

It is known from EP-A 169 026 to activate a large-pore, high silica zeolite containing framework boron by treating the zeolite with an aqueous solution of aluminum, gallium and/or iron salt.

It has now been found that the acidic catalytic activity (alpha value) of a high silica content crystalline zeolite of large pore size containing 0.1 to 2.5 wt.% framework boron, can be controlled, e.g. increased or decreased, if the zeolite is treated with an aqueous solution, preferably mildly acidic, of a salt of at least one divalent, trivalent and/or tetravalent metal selected from nickel, cobalt, indium, and Groups IB, IIB, IIIB, IVA, IVB and VIA of the Periodic Table either alone or in combination with one another or with another metal salt, e.g., a salt of aluminum, gallium or iron. The process of this invention can be effected under unusually mild conditions, such as, for example, by contacting the zeolite with the salt solution for 2 hours at 100°C.

While the mechanism of the present process if not fully understood, it is believed that the framework boron content of the zeolite is reduced by the contacting procedure while the divalent, trivalent and/or tetravalent metal content of the zeolite is increased, resulting in at least some cases in an exchange of metal for at least a portion of the boron originally present in the zeolite framework. The added metal changes the acid activity of the zeolite while little or no diminution of acid activity results from the loss of boron.

The expression "high silica content" as used herein means a silica to alumina ratio greater than 10 to 1, preferably greater than 30 to 1, and most preferably greater than 100 to 1 and includes those crystalline zeolites for which the silica to alumina ratio approaches infinity. Such high silica materials may sometimes be prepared from reaction solutions which contain no deliberate addition of aluminum. However, trace quantities of aluminum are usually present due to the impurity of the reaction solution. The silica to alumina ratio may be determined by conventional analysis. The ratio represents, as closely as possible, the ratio in the robust framework of the zeolite crystal, and is intended to exclude materials such as aluminum in the binder or in another form within the channels of the zeolite. The ratio also may be determined by the thermogravimetric analysis (TGA) of desorption of ammonia from the ammonium for of the zeolite. This method is described in Thermochimica Acta, 3, pages 113–124, 1971.

The term "large pore size" as used herein means a pore size defined by apertures or "windows" of 12-membered rings of oxygen atoms, such as are found in Zeolite X, or pores which behave in the fashion of those defined in that manner. Such large pore zeolites have a Constraint Index a defined in, for example, U.S. Patent No. 4 016 218 less than or equal to 2.5, preferably 0.4 to 2.5, and include zeolite beta, ZSM-12, and mordenite with zeolite beta being particularly preferred.

The principal lines and their relative intensities (R.I.) for zeolite beta, ZSM-12 and mordenite are given below in Tables I, II and III, respectively.

Table I. Zeolite Beta

| d-Spacing (A.U.) | R.I. |
|---|---|
| 11.5 + 0.3 | M-S |
| 7.4 + 0.2 | W |
| 6.6 + 0.15 | W |
| 4.15 + 0.10 | W |
| 3.97 + 0.10 | VS |
| 3.00 + 0.07 | W |
| 2.05 + 0.05 | W |

Table II. ZSM-12

| d-Spacing (A.U.) | R.I. |
|---|---|
| 11.9 + 0.2 | M |
| 10.1 + 0.2 | M |
| 4.76 + 0.10 | W |
| 4.29 + 0.08 | VS |
| 3.98 + 0.08 | M |
| 3.87 + 0.07 | VS |
| 3.49 + 0.07 | W |
| 3.38 + 0.07 | M |
| 3.20 + 0.06 | W |
| 3.05 + 0.05 | W |
| 2.54 + 0.03 | W |

| Table III. Mordenite |
|---|
| d-Spacing (A.U.) |
| 13.70 + 0.3 |
| 9.10 + 0.2 |
| 6.61 + 0.15 |
| 5.79 + 0.10 |
| 4.53 + 0.10 |
| 4.00 + 0.10 |
| 3.84 + 0.08 |
| 3.48 + 0.08 |
| 3.39 + 0.07 |
| 3.22 + 0.07 |
| 2.90 + 0.05 |

Methods for preparing high silica content zeolites that contain framework boron are disclosed in, for example, U.S. Patent No. 4,269,813. The amount of boron contained in the zeolite usually may be varied by incorporating different amounts of borate ion in the zeolite forming solution.

The divalent, trivalent and/or tetravelent metals to be inserted into the zeolite structure by the present method include individually or in combination, $In^{+3}$, $Co^{+2}$, $Ni^{+2}$ and those of Groups IB (e.g. $Cu^{+2}$), IIB (e.g. $Zn^{+2}$), IIIB (e.g. $Sc^{+3}$ and $La^{+3}$), IVB (e.g. $Ti^{+3}$, $Ti^{+4}$ and $Zr^{+4}$) IVA (e.g. $Sn^{+4}$), and VIB (e.g. $Cr^{+3}$) of the Periodic Table of the Elements (Fisher Scientific Company Cat. No. 5-702-10). The acid activity of the final crystalline product from the present method will have a value depending upon the metal incorporated and the amount of the metal incorporated, as will be demonstrated hereinafter.

For purpose of the present method, the as-synthesized crystalline zeolite is calcined in air at elevated temperature to remove organic matter if such is present. It is then converted by ion exchange to the ammonium form, after which it may be calcined to convert the ammonium form to the hydrogen form. Either the hydrogen or the ammonium form may be used, since the present method invention appears to be effective with both.

In accordance with the present method, the high silica content large pore zeolite containing at least 0.1 wt% framework boron, is contacted with a solution of a salt of the appropriate metal. Useful salts include those of common mineral acids such as nitrates, chlorides and sulfates, although it is contemplated that other soluble salts such as fluorides and acetates may be equally effective. The salt primarily functions as a source of metal cation, which is believed to be the species which is responible for the resulting activity. The preferred salts are the trivalent metal salts of the mineral acids, since these hydrolyze in aqueous solution to provide a mildly acidic aqueous medium in which the salt is maintained in solution and in which the process proceeds very readily.

Although the described salts of the mineral acids are preferred because they permit the present method to be practiced in one step, it is also possible to employ any soluble salt of the appropriate metal which in solution has a pH greater than about 6, provided that the zeolite is treated first with water or any aqueous solution of pH less than 6 under conditions effective to hydrolyze at least a portion of said framework boron, followed by contact with said salt solution. Preferably the hydrogen form of the zeolite is first treated with liquid water at a temperature of 25° C to 125° C for 0.1 hour to 80 hours to induce hydrolysis with simultaneous removal of boron from the zeolite. The ammonium form also may be treated, and even the sodium form, to effect hydrolysis, keeping in mind that these will hydrolyze more slowly than the hydrogen form. However, the hydrolysis of these forms will benefit from use of water which is made mildly acidic, thereby converting in situ the ammonium or the sodium form to the hydrogen form. Saturated steam also may be used to induce or to speed hydrolysis, with or without subsequent washing to remove boron. In general, the contemplated conditions for the hydrolysis are:

| | Temperature | Time |
|---|---|---|
| broad | 15° C - 200° C | 0.05 - 100 hrs. |
| preferred | 25° C - 125° C | 0.1 - 80 hrs. |
| most preferred | 50° C - 100° C | 0.2 - 20 hrs. |

The two-step technique described above is disclosed with reference to intermediate pore-size crystals in U.S. Patent 4,526,880.

Conditions for contacting with the metal salt solution are not believed to be critical. As will be seen from the examples which follow, metal incorporation takes place with activation when the crystals are treated for 2 hours, for example, with 0.1 Normal solutions of ferric or aluminum nitrate, or with 50% solution of $Al_2(OH)_5$ Cl solution, all at 100° C. Broadly, it is contemplated to contact the crystals from 0.05 hours to 10 hours with an aqueous solution of the salt at a temperature of 20°C to 150°C.

In general, following the contacting step, the zeolite is separated from the solution, washed with water, and calcined, e.g. heated to a temperature of 538°C in air.

The term "acid catalytic activity" as used herein refers to the effectiveness of a zeolite, when in suitable form, for catalyzing reactions known to be promoted by so called acid catalysts. Catalytic cracking, hydrocracking, skeletal isomerization, dewaxing, and various aromatic hydrocarbon reactions such as alkylation, dealkylation, isomerization and disproportionation, are hydrocarbon conversion reactions which fall in the category of acid catalyzed reactions. Other reactions, such as alcohol dehydration, are also in this class.

As is known in the art, the acid catalytic activity of a zeolite may be measured by its "alpha value", which is the ratio of the rate constant of a test sample for cracking normal hexane to the rate constant of a standard reference catalyst. Thus, an alpha value = 1 means that the test sample and the reference standard have about the same activity. The alpha test is described in U.S. Patent 3,354,078 and in The Journal of Catalysis, Vol. IV, pp. 527-529 (August 1965). Measurement of the "alpha value" is useful to assess the degree of activity control achieved with any sample treated by the method of this invention.

It is noted that the method of this invention is readily adapted to achieve a controlled activation, i.e. a predetermined activity. This may be done in one or more ways. By limiting the boron content of the material to be treated, the degree of activation is thereby limited. Or, by limiting the amount of salt in contact with the zeolite, or the treating time, or by use of lower temperature, a predetermined activation can be achieved. Or, the zeolite may be steamed at elevated temperature at any stage of its treatment to reduce its activity to a predetermined level. Since treatment with an iron salt does not increase activity as markedly as with an aluminum salt, this option, too, provides a means for controlling the ultimate activity of the zeolite by treating sequentially with iron and then with aluminum, or with a mixture of the two metal salts.

As is the case with many catalysts, it may be desired to incorporate the zeolite product of this invention with another material resistant to the temperatures and other conditions employed in organic conversion processes. Such materials include clays, silica and/or metal oxides, with alumina being particularly preferred.

In addition to the foregoing materials, the zeolite catalyst can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline zeolite and inorganic oxide matrix vary widely with the zeolite content ranging from 1 to 90 percent by weight and more usually in the range of 20 to 80 percent by weight of the composite.

The invention will now be illustrated by the following examples in which all parts and proportions are by weight unless stated to be otherwise.

Examples 1-13

A boron-containing zeolite beta was prepared from a forming solution that included boric acid. This material was calcined in air and converted to the ammonium form by exchanging the calcined material with $NH_4NO_3$ solutions at an adjusted solution pH of 9 to 10 range. The water-washed and dried $NH_4$ form was found to have the X-ray diffraction pattern of zeolite beta and the following elemental analysis:

$SiO_2$ 79.2% Weight
$Al_2O_3$ 0.72% Weight
$B_2O_3$ 3.28% Weight
Na 0.02% Weight

N 1.14% Weight
Ash 82.4% Weight
After calcination to the hydrogen form, the zeolite was found to have an alpha value of 28.

Portions of the ammonium form of the above zeolite were treated with aqueous solutions of the metal salts listed in Table IV at 100°C for two hours. In each case the resultant solid was then filtered, water-washed and calcined at 540°C in air for 3 hours. The activity and level of metal incorporation of the resultant products are also listed in Table IV.

TABLE IV

| Example | 1 | 2 | 3 | 4 | 5 | 6 | 7 |
|---|---|---|---|---|---|---|---|
| Chemical Used | $Sc(NO_3)_3$ | $La(NO_3)_3$ | $In(NO_3)_3$ | $Cr(NO_3)_3$ | $TiCl_3$ | $SnCl_4$ | $FeSO_4$ |
| Metal Incorporated (% wt. of final Catalyst) | 0.70 | 0.29 | 0.20 | 0.39 | 0.05 | 5.8 | 1.0 |
| Alpha Value | 29 | 25 | 2.6 | 18 | 29 | 6 | 19 |

TABLE IV (continued)

| Example | 8 | 9 | 10 | 11 | 12 | 13 |
|---|---|---|---|---|---|---|
| Chemical Used | REZAL* | $Co(NO_3)_2$ | $Zn(NO_3)_2$ | $Ni(NO_3)_2$ | $Cu(NO_3)_2$ | $Cr(NO_3)_3$ |
| Metal Incorporated (% wt. of final Catalyst) | 1.5 Zr<br>1.0 Al | 0.83 | 0.95 | 0.86 | 0.91 | - |
| Alpha Value | 275 | 27 | 24 | 24 | 14 | 32 |

*A brand name chemical containing Al and Zr.
Supplied by Reheis Chemical Company, Berkeley Heights, NJ

## Claims

1. A method for controlling the catalytic activity of a composition comprising a high silica content large pore zeolite containing from 0.1 wt% to 2.5 wt% of framework boron, said method comprising contacting said zeolite with an aqueous solution of a salt of a metal selected from nickel, cobalt, indium and those of Groups IB, IIB, IIIB, IVA, IVB, and VIA of the Periodic Table of Elements to remove boron from said composition.

2. The method claimed in Claim 1 wherein said crystalline zeolite is converted to the ammonium or to the hydrogen form before said contacting step.

3. The method claimed in Claim 1 or Claim 2 wherein said contacting step is conducted at a pH not greater than about 6.

4. The method claimed in any preceding Claim wherein the zeolite has a silica to alumina ratio greater than 10:1.

5. The method claimed in any preceding Claim wherein the zeolite has a constraint index less than 2.5.

6. The method described in Claim 1 wherein said zeolite is zeolite beta, ZSM.12 or mordenite.

7. The method claimed in any preceding Claim wherein said metal is selected from indium, tin, copper, zinc, scandium, lanthanum, titanium, zirconium, chromium, cobalt, and nickel.

8. The method claimed in any preceding Claim wherein the contacting step is conducted at 20 to 150°C for 0.05 to 10 hours.

## Patentansprüche

1. Verfahren zur Regelung der katalytischen Aktivität einer Zusammensetzung, die einen großporigen Zeolith mit hohem Siliciumdioxidgehalt umfaßt, der von 0,1 bis 2,5 Gew.-% Gitter-Bor enthält, wobei dieses Verfahren den Kontakt des Zeoliths mit einer wäßrigen Lösung eines Salzes eines Metalles umfaßt, das aus Nickel, Cobalt, Indium und Metallen der Gruppen IB, IIB, IIIB, IVA, IVB und VIA des Periodensystems der Elemente ausgewählt ist, um Bor aus dieser Zusammensetzung zu entfernen.

2. Verfahren nach Anspruch 1, worin der kristalline Zeolith vor diesem Kontaktschritt in die Ammonium- oder Wasserstofform umgewandelt wird.

3. Verfahren nach Anspruch 1 oder 2, worin der Kontaktschritt bei einem pH-Wert von nicht mehr als etwa 6 durchgeführt wird.

4. Verfahren nach einem der vorstehenden Ansprüche, worin der Zeolith ein Siliciumdioxid/-Aluminiumoxid-Verhältnis von größer als 10:1 aufweist.

5. Verfahren nach einem der vorstehenden Ansprüche, worin der Zeolith einen Zwangsindex von kleiner als 2,5 aufweist.

6. Verfahren nach Anspruch 1, worin der Zeolith Zeolith-Beta, ZSM-1 oder Mordenit ist.

7. Verfahren nach einem der vorstehenden Ansprüche, worin das Metall aus Indium, Zinn, Kupfer, Zink, Scandium, Lanthan, Titan, Zirconium, Chrom, Cobalt und Nickel ausgewählt ist.

8. Verfahren nach einem der vorstehenden Ansprüche, worin der Kontaktschritt 0,05 bis 10 Stunden lang bei 20 bis 150°C durchgeführt wird.

## Revendications

1. Un procédé de contrôle de l'activité catalytique d'une composition comprenant une zéolite à pores de grandes dimensions à teneur en silice élevé contenant de 0,1 à 2,5% en poids de bore structurel, ledit procédé consistant en la mise en contact de ladite zéolite avec une solution aqueuse d'un sel d'un métal choisi parmi le nickel, le cobalt, l'indium et ceux des groupes IB, IIB, IIIB, IVA, IVB et VIA du tableau de la classification périodique afin d'éliminer le bore de ladite composition.

2. Le procédé selon la revendication 1, dans lequel ladite zéolite cristalline est convertie en sa forme ammonium ou protonée avant ladite étape de mise en contact.

3. Le procédé selon la revendication 1 ou 2, dans lequel ladite étape de mise en contact est mise en œuvre à un pH inférieur à 6.

4. Le procédé selon l'une quelconque des revendications précédentes, dans lequel la zéolite a un ratio silice/alumine supérieur à 10:1.

5. Le procédé selon l'une quelconque des revendications précédentes, dans lequel la zéolite a un indice de contrainte inférieur à 2,5.

6. Le procédé selon la revendication 1, dans lequel ladite zéolite est la zéolite bêta, la ZSM-12 ou la mordénite.

7. Le procédé selon l'une quelconque des revendications précédentes, dans lequel ledit métal est choisi parmi: indium, étain, cuivre, zinc, scandium, lanthane, titane, zirconium, chrome, cobalt et nickel.

8. Le procédé selon l'une quelconque des revendications précédentes, dans lequel l'étape de mise en contact est mise en œuvre à une température de l'ordre de 20°C à 150°C pendant une durée de 0,05 à 10 heures.